(19) Europäisches Patentamt / European Patent Office / Office européen des brevets

(11) **EP 2 407 237 B1**

(12) **FASCICULE DE BREVET EUROPEEN**

(45) Date de publication et mention
de la délivrance du brevet:
**10.06.2015 Bulletin 2015/24**

(21) Numéro de dépôt: **11290275.4**

(22) Date de dépôt: **17.06.2011**

(51) Int Cl.:
*B01J 23/46* (2006.01)    *B01J 23/74* (2006.01)
*B01J 23/00* (2006.01)    *B01J 23/89* (2006.01)
*B01J 35/00* (2006.01)    *B01J 37/02* (2006.01)
*B01J 37/08* (2006.01)    *B01J 37/18* (2006.01)
*C10G 2/00* (2006.01)    *C07C 1/04* (2006.01)

(54) **Catalyseur à base de cobalt sur support silice-alumine pour la synthèse fischer-tropsch**

Katalysator auf Kobaltbasis auf einer Silizium-Aluminiumunterlage für die Fischer-Tropsch-Synthese

Cobalt-based catalyst on silica-alumina support for Fischer-Tropsch synthesis

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2010 FR 1003006**

(43) Date de publication de la demande:
**18.01.2012 Bulletin 2012/03**

(73) Titulaires:
• **IFP Energies nouvelles**
**92852 Rueil-Malmaison Cedex (FR)**
• **ENI S.p.A.**
**00144 Rome (IT)**

(72) Inventeurs:
• **Maury, Sylvie**
**69390 Charly (FR)**
• **Legens, Christele**
**69002 Lyon (FR)**
• **Sorbier, Loic**
**38200 Seyssuel (FR)**
• **Diehl, Fabrice**
**69007 Lyon (FR)**
• **Lopez, Joseph**
**30340 Saint Julien les Rosiers (FR)**
• **Fischer, Lars**
**38200 Vienne (FR)**

(56) Documents cités:
**EP-A1- 1 239 019    WO-A1-00/20116**
**WO-A1-01/76734**

• **JEAN-MARIE A ET AL: "Cobalt supported on alumina and silica-doped alumina: Catalyst structure and catalytic performance in Fischer-Tropsch synthesis", COMPTES RENDUS - CHIMIE, ELSEVIER, PARIS, FR, vol. 12, no. 6-7, 1 juin 2009 (2009-06-01) , pages 660-667, XP026160627, ISSN: 1631-0748, DOI: DOI: 10.1016/J.CRCI.2008.07.008 [extrait le 2009-02-26]**

Remarques:
Le dossier contient des informations techniques présentées postérieurement au dépôt de la demande et ne figurant pas dans le présent fascicule.

EP 2 407 237 B1

**Description**

La présente invention concerne le domaine des catalyseurs utilisés pour les réactions de synthèse d'hydrocarbures à partir d'un mélange de gaz comprenant du monoxyde de carbone et de l'hydrogène, généralement appelée synthèse Fischer-Tropsch, et plus particulièrement un catalyseur comprenant au moins du cobalt, supporté sur une silice-alumine.

Il est bien connu de l'Homme du métier que le gaz de synthèse peut être converti en hydrocarbures en présence de catalyseur contenant des métaux du groupe VIII de la classification périodique des éléments tels que le fer, le ruthénium, le cobalt et le nickel qui catalysent la transformation d'un mélanges CO et $H_2$ dit gaz de synthèse (c'est-à-dire un mélange de monoxyde de carbone et d'hydrogène) éventuellement dilué par du dioxyde de carbone ou tout autre diluant seul ou en mélange tel que le méthane, l'azote ou l'éthane, en hydrocarbures solides, liquides et gazeux à température ambiante. Ce procédé est connu sous le nom de synthèse Fisher-Tropsch.

Différentes méthodes ont été décrites et développées dans l'art antérieur, pour améliorer la préparation de catalyseurs Fischer-Tropsch à base de cobalt supporté sur différents supports. Les plus utilisés étant l'alumine, la silice et le dioxyde de titane, parfois modifiés par des éléments additionnels. Le brevet US 6 806 226 décrit par exemple des catalyseurs à base de cobalt. Les catalyseurs Fischer-Trospch à base de cobalt ainsi décrits présentent cependant l'inconvénient de ne pas avoir une répartition en cobalt homogène ni dans les grains de catalyseur ni à la surface du catalyseur. La mauvaise répartition du cobalt en surface se fait sous forme d'agglomération et enrichissement de cobalt en surface et forme une couche que l'on appelle également croûte. Dans le cas de catalyseurs mis en forme pour une utilisation en lit fixe, notamment sous la forme d'extrudés ou de billes, l'imprégnation en croûte (egg-shell selon la terminologie anglo-saxonne) peut être souhaitable et donc privilégiée afin de maximiser l'accessibilité des réactifs au métal déposé en surface de l'objet catalytique.

Le brevet US 5 036 032, par exemple, décrit la préparation d'un catalyseur à base de cobalt permettant d'augmenter la densité de sites actifs en surface en utilisant un précurseur de viscosité suffisante pour empêcher la pénétration plus en profondeur dans les pores par capillarité. La réduction directe sans étape de calcination permet d'augmenter la dispersion. La silice ($SiO_2$) est préféré comme support. Les limitations diffusionnelles sont ainsi évitées.

Par contre, dans le cas de l'utilisation de catalyseur sous forme de particules de granulométrie inférieure à $500\mu$m dans des procédés type slurry, colonne à bulles (ou slurry bubble column selon la terminologie anglo-saxonne), une répartition homogène et surtout l'absence de croûte est généralement souhaitable. En effet, l'utilisation d'un procédé slurry entraîne un stress mécanique important pour le catalyseur, la répartition du métal actif sous forme d'une croûte le rend plus sensible aux effets de l'attrition et peut causer une perte de métal actif au cours du temps. Une trop forte agrégation du métal à la périphérie du catalyseur peut aussi entraîner une perte de sélectivité liée à des contraintes stériques (cristallites de métal trop fortement agrégées entre elles) limitant la croissance de chaînes hydrocarbonées et dégradant la sélectivité $C_{5+}$ (et par conséquent la probabilité de croissance de chaîne également appelée alpha par l'Homme du métier) lors de la réaction de synthèse d'hydrocabures.

Les techniques habituelles de préparation de catalyseurs utilisées pour la synthèse Fischer-Tropsch, comprennent en général les étapes suivantes: imprégnation du support, séchage, calcination et réduction éventuelle.

Plusieurs brevets décrivent ainsi des méthodes de préparation des catalyseurs utilisés en synthèse Fischer-Tropsch basées sur ces techniques habituelles et visant à améliorer la répartition homogène du cobalt dans le catalyseur et d'éviter la formation d'une croûte.

Le brevet EP 0 736 326 décrit une imprégnation en mode slurry sous vide et un séchage en deux étapes, une première étape sous vide à une température comprise entre 60°C et 95°C à l'issue de laquelle il reste moins de 20% d'eau dans le catalyseur, et une seconde étape à pression atmosphérique à une température comprise entre 100°C et 180°C pour éliminer l'eau de cristallisation restante.

Le brevet EP 1 119 411 décrit une étape d'imprégnation en slurry, un séchage en deux étapes sous vide, une première étape à une température comprise entre 60°C et 95°C et une deuxième étape à une température plus élevée et une pression plus basse, suivie d'une calcination à une température inférieure ou égale à 350°C.

Le brevet US 6 806 226 décrit un catalyseur obtenu par une imprégnation sous vide et un séchage partiel sous vide à une température comprise entre 60°C et 95°C, suivi d'une calcination à une température comprise entre 75°C et 400°C avec une rampe de température comprise entre 0,5 °C/min et de 1°C/min, pour des vitesses volumiques horaires (vvh) d'au moins 1 $m^3$d'air/(Kg Co($NO_3$)$_2$, 6$H_2$O*h). Ce brevet prévoit la possibilité d'une calcination beaucoup plus rapide avec une rampe de température de 100°C/min pour éliminer les nitrates si la vvh est plus élevée.

L'inconvénient de ces techniques est que le catalyseur contient encore de l'eau à l'issue de l'étape de séchage, car toute l'eau apportée par l'imprégnation n'est pas éliminée. La présence de cette eau va défavoriser la répartition homogène du cobalt dans et en surface du catalyseur.

En effet, de manière surprenante la demanderesse a remarqué qu'un séchage efficace mais pas trop rapide dans des conditions spécifiques, avant de démarrer l'étape de calcination, permet d'améliorer l'homogénéité du cobalt dans et surtout en surface du catalyseur en éliminant totalement la croûte de cobalt présente en périphérie des grains de catalyseur. Cela permet de produire des catalyseurs d'activité et de sélectivité $C_{5+}$ et alpha paraffine fortement améliorées.

La présente invention a donc pour objet de palier à un ou plusieurs des inconvénients de l'art antérieur en proposant un procédé de préparation d'un catalyseur, ledit catalyseur présentant une meilleure efficacité due à une meilleure répartition du cobalt à l'intérieur des grains de catalyseur et à leur surface.

Pour cela la présente invention propose un procédé de préparation d'un catalyseur, pour effectuer la synthèse d'hydrocarbures à partir d'un mélange comprenant du monoxyde de carbone et de l'hydrogène, dont la phase active comprend du cobalt déposé sur un support formé d'une silice-alumine comprenant de 1 à 30 % poids de silice et ledit catalyseur a un rapport atomique mesuré en spectroscopie photo-électronique à rayons X : $(Co/Al)_{non\ broyé}$ / $(Co/Al)_{broyé}$ compris entre 1 et 12,

le rapport atomique (Co/Al) étant défini par spectroscopie photo-électronique rayons à X en déterminant la mesure pour des particules broyées et pour des particules non broyées, le rapport étant égal à : $(Co/Al)_{non\ broyé}$ pour des particules non broyées / $(Co/Al)_{broyé}$ pour des particules broyées, ledit procédé comprenant au moins une fois l'enchainement des étapes suivantes:

- une étape d'imprégnation du support,
- une étape de séchage réalisée une température inférieure à 100°C, avec une rampe de température comprise entre 0,3°C/min et 1,2°C/min, un débit de gaz compris entre 0.5 et 6 Nl/(h.g de catalyseur), une pression égale à 0.1 MPa et pendant une durée comprise entre 2h et 15h,
- une étape de calcination.

Selon un mode de réalisation de l'invention, la teneur en cobalt est comprises entre 1 et 60 % poids.

Selon un mode de réalisation de l'invention, le support est formé d'une spinelle incluse dans une silice-alumine.

Selon un mode de réalisation de l'invention, la phase active contient au moins un élément additionnel choisi dans le groupe constitué par le ruthénium, le molybdène, le tantale, le platine, le palladium et le rhénium.

Selon un mode de réalisation de l'invention, l'élément additionnel est le ruthénium ou le rhénium.

L'invention concerne un procédé de préparation du catalyseur tel que défini précédemment comprenant au moins une fois l'enchainement des étapes suivantes:

- une étape d'imprégnation du support,

- une étape de séchage réalisée une température inférieure à 100°C, avec une rampe de température comprise entre 0,3°C/min et 1,2°C/min, un débit de gaz compris entre 0.5 et 6 Nl/(h.g de catalyseur), une pression égale à 0.1 MPa et pendant une durée comprise entre 2h et 15h,

- une étape de calcination.

Selon un mode de réalisation de l'invention, l'enchainement des étapes est répété au moins deux fois.

Selon un mode de réalisation de l'invention, l'étape de calcination est réalisée à une température comprise entre 320 et 460°C, avec une rampe de 0,3°C/min à 5°C/min et un débit de gaz compris entre 0,3 et 4 Nl d'air sec/(h.g de catalyseur) et pendant une durée comprise entre 2h et 15h.

L'invention décrit également un procédé de synthèse d'hydrocarbures mettant en oeuvre le catalyseur tel que décrit précédemment.

Selon un mode de réalisation de l'invention, la synthèse d'hydrocarbures est une synthèse Fischer-Tropsch.

Selon un mode de réalisation de l'invention, la mise en oeuvre de la synthèse d'hydrocarbure est réalisée dans un réacteur triphasique et dans lequel le catalyseur est divisé à l'état de particules de diamètre compris entre 5 microns et 300 microns.

D'autres caractéristiques et avantages de l'invention seront mieux compris et apparaîtront plus clairement à la lecture de la description faite ci-après, en se référant aux figures annexées et données à titre d'exemple:

• la figure 1 représente une image en microscopie électronique à balayage, d'un catalyseur de l'art antérieur, mettant en évidence la présence d'une croûte importante (figure 1a) et l'agrégation du cobalt au sein des grains de catalyseur (figure 1b),

• la figure 2 représente une image en microscopie électronique à balayage, d'un catalyseur de l'art antérieur, mettant en évidence la présence d'une croûte importante et la mauvaise répartition du cobalt au sein des grains de catalyseur (agrégats),

- la figure 3 représente une image en microscopie électronique à balayage, du catalyseur selon l'invention, mettant en évidence la présence d'une faible croûte (figure 3a) et la faible agrégation du cobalt au sein des grains de catalyseur (figure 3b).

Le catalyseur peut être utilisé dans des réactions mises en oeuvre en suspension dans un réacteur fluidisé triphasique, préférentiellement de type colonne à bulle. Dans cette mise en oeuvre préférée du catalyseur, le catalyseur est divisé à l'état de poudre très fine, particulièrement de l'ordre de quelques dizaines de microns et par exemple entre 5 microns et 300 microns, préférentiellement entre 20 microns et 150 microns, et de manière encore plus préférée entre 20 et 120 microns. Cette technologie est également connue sous la terminologie de procédé "slurry" par l'Homme du métier.

Le catalyseur peut également être utilisé dans différents types de réacteurs, et par exemple en lit fixe, en lit mobile, en lit bouillonnant ou encore en lit fluidisé triphasique.

Le catalyseur comprend une phase métallique active déposée sur un support. La phase active comprend du cobalt, sa teneur représente de 1 à 60 % poids par rapport au poids du catalyseur, de préférence de 5 à 30 % poids par rapport au poids du catalyseur et de manière très préférée de 10 à 30% poids par rapport au poids du catalyseur. La phase active du catalyseur comprend également de manière avantageuse au moins un métal additionnel choisi parmi le platine, le palladium, le rhénium, le ruthénium, le manganèse et le tantale et de manière très préférée choisi parmi le platine, le ruthénium et le rhénium. Le(s) métal(ux) additionnel(s) est(sont) préférentiellement présent(s) en une teneur présentant de 0,01 à 2 % poids, de préférence de 0,03 à 0,5 % poids par rapport au poids du catalyseur.

Le catalyseur de l'invention se trouve sous forme oxyde avant son activation qui consiste en une réduction. Il présente des cristallites d'oxyde du métal du groupe VIII, présent dans la phase active du catalyseur, préférentiellement des cristallites d'oxyde de cobalt $Co_3O_4$.

Le support sur lequel est déposée la phase active est formé d'une silice-alumine <u>comprenant</u> de 1 à 30% poids de silice. La silice-alumine est homogène à l'échelle du micromètre, et de manière encore plus préférée, homogène à l'échelle du nanomètre. Le support sur lequel est déposée la phase active peut encore avantageusement être formé d'une spinelle incluse dans une silice-alumine. En particulier, le support du catalyseur peut être avantageusement constitué d'une spinelle simple, incluse dans une silice-alumine, de type $MAl_2O_4/Al_2O_3.SiO_2$ ou d'une spinelle mixte, incluse dans une silice-alumine, de type $M_xM'_{(1-x)}Al_2O_4/Al_2O_3.SiO_2$ où M et M' sont des métaux distincts choisis dans le groupe constitué par le magnésium (Mg), le cuivre (Cu), le cobalt (Co), le nickel (Ni), l'étain (Sn), le zinc (Zn), le lithium (Li), le calcium (Ca), le césium (Cs), le sodium (Na), le fer (Fe) et le manganèse (Mn), où $Al_2O_3.SiO_2$ désigne la formule chimique d'une silice-alumine, où x est compris entre 0 et 1, les valeurs 0 et 1 étant elles-mêmes exclues. Un tel support formé d'une structure spinelle comprend au moins 5% poids de ladite structure spinelle, de manière préférée au moins 10% poids, et de manière encore plus préférée au moins 15 % poids. La silice-alumine dans laquelle est préférentiellement incluse la structure spinelle comprend préférentiellement de 1 à 30% poids de silice. Elle est homogène à l'échelle du micromètre, et de manière encore plus préférée, homogène à l'échelle du nanomètre.

Un support formé d'une spinelle incluse dans une silice-alumine peut être préparé par toute méthode connue de l'Homme du métier. En particulier, tout procédé permettant d'obtenir le support, modifié par l'addition d'au moins un élément M pour obtenir une structure spinelle simple et d'au moins un élément M' pour obtenir une structure spinelle mixte, convient. Une méthode de préparation d'un tel support consiste, par exemple, à imprégner un support silice-alumine, préformé ou en poudre, avec au moins une solution aqueuse contenant les précurseurs hydrosolubles des éléments choisis pour la structure spinelle et à procéder généralement à des étapes de lavage, séchage et enfin de calcination. Une autre méthode consiste à préparer le support du catalyseur, à base de silice-alumine, par coprécipitation d'une solution aqueuse contenant les métaux Al, M et éventuellement M', par exemple sous forme de nitrates, par une solution aqueuse de carbonate ou d'hydrogénocarbonate alcalin, suivie d'un lavage, d'un séchage, et enfin d'une calcination. Une autre méthode consiste encore à préparer le support du catalyseur, à base de silice-alumine, par le procédé sol-gel, ou encore par complexation d'une solution aqueuse contenant les métaux Al, M et éventuellement M', par au moins un acide alpha alcool ajouté à raison de 0,5 à 2 moles d'acide par mole de métaux, suivi d'un séchage sous vide conduisant à l'obtention d'une substance vitreuse homogène, puis d'une calcination. Un tel support est soumis à un traitement thermique avant la préparation proprement dite du catalyseur utilisé dans le procédé selon l'invention afin d'obtenir la structure spinelle (aluminate de M ou aluminate de M et M', où M et M' ont les définitions données ci-dessus). Le traitement thermique est préférentiellement mis en oeuvre à une température comprise entre 600 et 1200°C, très préférentiellement entre 740 et 1030°C et de manière encore plus préférée entre 800 et 980°C. Il est effectué sous atmosphère oxydante, par exemple sous air ou sous air appauvri en oxygène. Il peut également être effectué au moins en partie sous azote.

Le support sur lequel est déposé la phase active peut présenter une morphologie sous forme de poudre de granulométrie variable, notamment lorsque le catalyseur est mis en oeuvre dans un réacteur de type colonne à bulles (ou "slurry bubble column" selon la terminaison anglo-saxonne). La taille des grains du catalyseur peut être comprise entre quelques microns et quelques centaines de microns. Pour une mise en oeuvre en réacteur "slurry", la taille des particules du catalyseur est préférentiellement comprise entre 10 microns et 500 microns, de manière préférée entre 10 microns et 300 microns, de manière très préférée entre 20 et 150 microns, et de manière encore plus préférée entre 30 et 120 microns.

Le catalyseur est préparé selon un procédé comprenant au moins :

- une étape d'imprégnation du support,

- une étape de séchage,

- une étape de calcination.

Les étapes imprégnation, séchage et calcination étant réalisées au moins une fois. Selon un mode préféré de réalisation de l'invention, l'enchainement des étapes d'imprégnation, séchage et calcination, dans cette ordre, est réalisé au moins 2 fois.

Le procédé de préparation du catalyseur peut également comprendre une étape de stabilisation du support réalisée avant l'étape d'imprégnation du support.

Le procédé de préparation du catalyseur selon l'invention peut également comprendre une étape de réduction du catalyseur réalisée après l'enchainement des étapes d'imprégnation, séchage et calcination.

Il a été découvert par la demanderesse qu'un séchage très efficace et complet du catalyseur avant l'étape de calcination évite la formation de croûte de cobalt à la surface des particules du catalyseur et de plus améliore la répartition du cobalt à l'intérieur des particules de catalyseur.

Le procédé de préparation du catalyseur selon l'invention comprend donc après chaque étape d'imprégnation une étape de séchage, indépendante de l'étape de calcination, qui permet d'éviter la migration en surface du cobalt, et évite également la formation d'agrégats du cobalt.

*Stabilisation du support:*

La stabilisation du support se fait par imprégnation à sec de la silice-alumine par une solution aqueuse d'un sel du métal du groupe VIII, et notamment le cobalt, le solide ainsi imprégné est ensuite séché à une température comprise entre 60°C et 200°C pendant une durée allant de une demi-heure à trois heures, puis calciné à une température comprise entre 300°C et 600°C sous air sec pendant une durée allant de une demi-heure à trois heures, puis à une température comprise entre 700°C et 1100°C pendant une durée allant de une heure à 24 heures, de préférence de 2 heures à 5 heures, le solide obtenu contenant au moins 5% poids de la structure spinelle comprenant le cobalt, de manière préférée au moins 10% poids, et de manière encore plus préférée au moins 15 % poids. Cette stabilisation permet de limiter les attaques du milieu réactionnel de synthèse Fischer-Tropsch (eau, acide). Le métal du groupe VIII, et notamment le cobalt ainsi ajouté, a une très forte interaction avec le support, et n'est donc pas réductible.

*Imprégnation du support:*

L'imprégnation du support ou du support stabilisé se fait par au moins une solution contenant au moins un précurseur dudit cobalt. En particulier, cette étape peut être réalisée par imprégnation à sec, par imprégnation en excès, ou encore par dépôt - précipitation selon des méthodes bien connues de l'Homme du métier. De manière préférée, cette étape d'imprégnation est réalisée par imprégnation à sec à température ambiante, c'est à dire à une température égale à 20°C, laquelle consiste à mettre en contact le support du catalyseur avec une solution, contenant au moins un précurseur dudit métal du groupe VIII, dont le volume est égal au volume poreux du support à imprégner. Cette imprégnation peut être réalisée à toute autre température compatible avec cette technique, et par exemple entre 5°C et 40°C, de préférence entre 15°C et 25°C, et de manière très préférée entre 17°C et 23°C. Cette solution contient les précurseurs métalliques du cobalt à la concentration voulue pour obtenir sur le catalyseur final la teneur en métal visée.

Le cobalt est mis au contact du support par l'intermédiaire de tout précurseur métallique soluble en phase aqueuse ou en phase organique. Lorsqu'il est introduit en solution organique, le précurseur du métal est par exemple l'oxalate ou l'acétate dudit métal du groupe VIII. De manière préférée, le précurseur du métal est introduit en solution aqueuse, par exemple sous forme de nitrate, de carbonate, d'acétate, de chlorure, d'oxalate, de complexes formés par un polyacide ou un acide-alcool et ses sels, de complexes formés avec les acétylacétonates, ou de tout autre dérivé inorganique soluble en solution aqueuse, laquelle est mise en contact avec ledit support. Dans le cas du cobalt, on utilise avantageusement comme précurseur de cobalt, le nitrate de cobalt, l'oxalate de cobalt ou l'acétate de cobalt.

La préparation du catalyseur selon l'invention, comprend avantageusement au moins une étape supplémentaire consistant à déposer au moins un métal additionnel choisi parmi le platine, le palladium, le rhénium, le rhodium, le ruthénium, le manganèse et le tantale sur ledit support du catalyseur. De manière préférée, le métal additionnel est choisi parmi le platine, le ruthénium et le rhénium et de manière très préférée, le métal additionnel est le platine. Le dépôt du métal additionnel sur le support peut être réalisé par toute méthode connue de l'Homme du métier, préférentiellement par imprégnation du support du catalyseur par au moins une solution contenant au moins un précurseur dudit métal additionnel, par exemple par imprégnation à sec ou par imprégnation en excès.

### Séchage

Le séchage est une étape importante dans la préparation du catalyseur selon l'invention. Les étape d'imprégnation, de séchage, et de calcination sont réalisées indépendamment l'une de l'autre.

Le séchage mis en oeuvre pour la préparation du catalyseur selon l'invention, peut être réalisé dans un four tubulaire, en étuve en présence d'un débit de gaz et de préférence d'air sec, et en général dans tout type d'enceinte connue de l'Homme du métier permettant de faire circuler un débit d'air élevé. Dans le cas où le séchage est réalisé dans un four tubulaire ou dans une étuve ou tout autre matériel du même type, il est réalisé à une température inférieure à 100°C, et de préférence inférieure ou égale à 80°C, et de manière très préférée comprise entre 40°C et 80°C. La rampe de température utilisée pour amener la température de travail qui est à température ambiante, comprise en général entre 15°C et 25°C, à une température inférieure à 100°C et de préférence inférieure ou égale à 80°C et de manière très préférée comprise entre 40°C et 80°C, est comprise entre 0,3°C/min et 1,2°C/min. Cette étape de séchage à une durée comprise entre 2h et 15h, et de préférence entre 4h et 12h. Le débit de gaz utilisé est compris entre 0.5 et 6 Nl/(h.g de catalyseur) (normaux litres par heure et par gramme de catalyseur), et de préférence entre 1 et 4 Nl/(h.g de catalyseur).

Le séchage est réalisé à pression atmosphérique soit à 0.1 MPa.

### Calcination:

L'étape de calcination est réalisée à une température comprise entre 320°C et 460°C et de préférence entre 350 et 440°C. Dans le cas où le séchage est réalisé en four tubulaire ou en étuve, la calcination est réalisée dans la même enceinte. A la fin de l'étape de séchage à une température inférieure à 100°C et de préférence inférieure ou égale à 80°C, la température est augmentée avec une rampe de 0,1 à 10°C/min et de préférence de 0,3°C/min à 5°C/min et un débit de 0,3 à 4 Nl d'air sec/(h.g de catalyseur), de préférence de 0,5 à 3Nl/(h.g de catalyseur), et de manière très préférée de 0,6 à 0,9 Nl/(h.g de catalyseur).

Elle est préférentiellement réalisée pendant une durée comprise entre 2h et 15h et de préférence entre 4h et 12h.

### Réduction du catalyseur

Préalablement à son utilisation dans un réacteur catalytique, le catalyseur subit au moins un traitement réducteur, par exemple sous hydrogène, pur ou dilué, à haute température. Ce traitement permet d'activer ledit catalyseur et de former des particules de métal, en particulier de métal du groupe VIII, à l'état zéro valent. La température de ce traitement réducteur est préférentiellement comprise entre 200 et 500 °C et sa durée est comprise entre 2 et 20 heures.

Ce traitement réducteur est effectué soit *in situ* (dans le même réacteur que celui où est opéré la réaction de Fischer-Tropsch ), soit *ex situ* avant d'être chargé dans le réacteur.

Lorsque le métal du groupe VIII utilisé est le cobalt, l'étape de réduction permet de réaliser la réaction suivante:

$$Co_3O_4 \rightarrow CoO \rightarrow Co(0)$$

### Détection de la couche de métal de groupe VIII à la surface des particules de catalyseur:

Habituellement la répartition du cobalt à l'intérieur des particules de catalyseur ainsi que la présence ou l'absence d'une couche de cobalt également appelée croûte se détecte par microanalyse X par sonde électronique. La microanalyse X par sonde électronique possède une résolution spatiale de l'ordre de quelques microns. Une croûte d'épaisseur inférieure au micron ne pourra pas être détectée par cette technique. La répartition du cobalt à l'intérieur des grains de catalyseur et la visualisation d'une croûte peut également se faire par microscopie électronique à balayage en électrons rétrodiffusés (MEB). Cependant, dans les cas où la croûte est d'épaisseur irrégulière ou d'épaisseur inférieure à 20nm, cette technique ne met pas en évidence de croûte alors qu'il peut y en avoir une. Elle ne permet pas non plus de distinguer parfaitement la répartition du cobalt (agrégats).

La demanderesse s'est aperçu de façon surprenante qu'une analyse effectuée sur les échantillons préparés de façon adaptée avec la technique de spectroscopie photo-électronique à rayons X (ci après dénommée XPS pour X-Ray photoemission spectrometry selon la terminologie anglo-saxonne) permettait de mettre en évidence une croûte non visible en microscopie électronique à balayage. Ainsi, l'XPS permet de mettre en évidence des différences d'homogénéité entre deux préparations considérés homogènes en MEB. L'XPS permet également de montrer que certaines préparations spécifiques de catalyseur peuvent conduire à une répartition encore plus homogène que d'autres, alors que la MEB les aurait considérées équivalentes

Pour affiner la mesure de la croûte et de répartition du cobalt, la technique de spectroscopie photo-électronique à rayons X est donc utilisée dans le cadre de l'invention. Dans cette technique les particules de catalyseurs sont irradiées par des rayons X monochromatiques qui provoquent l'ionisation des atomes par effet photoélectrique. L'énergie cinétique $E_c$ de ces photoélectrons est mesurée, ce qui donne le spectre de l'intensité des électrons en fonction de l'énergie mesurée.

Chaque photon X incident a la même énergie $h \cdot v$, puisque le faisceau est monochromatique ($h$ étant la constante de Planck et $v$ la fréquence de l'onde lumineuse incidente). Lors de l'interaction avec l'atome, une partie de cette énergie sert à extraire un ou plusieurs électrons lié à son orbitale atomique par une énergie de liaison appelée $E_L$ ; le reste est transféré à l'électron sous la forme d'énergie cinétique.

Le spectre en énergie cinétique présente donc des pics, et l'on peut déterminer l'énergie de liaison correspondant à chaque pic par la relation suivante :

$$E_L = h^*v - E_c$$

avec

$E_L$ = Énergie de liaison [J]
$E_c$ = Énergie cinétique électronique [J]
$h$ = Constante de Planck [J s] (*~6,626 0 755 $\times 10^{-34}$*)
$v$ = Fréquence de radiation [s$^{-1}$]

L'énergie du photon X incident est de l'ordre de grandeur de l'énergie d'ionisation des électrons de coeur: leur émission donne les pics en XPS essentiellement caractéristiques, donc, de la nature de l'atome; alors que l'information chimique (surtout le degré d'oxydation) est tirée des petits déplacements du pic en XPS correspondant à la variation d'énergie entre couches de valence, cette dernière (correspondant aux domaine de l'UV/visible/proche IR en général) est faible devant celle des rayons X.

Il est ainsi possible d'avoir accès à la composition chimique de l'extrême surface du matériau analysé sur une profondeur de 5 nanomètres environ (qui correspond au libre parcours moyen des photons X), par comparaison avec des spectres connus.

La mesure en XPS du rapport atomique du cobalt sur l'alumine (Co/Al) est réalisée sur d'une part des grains de catalyseur broyés et d'autre part des grains non broyés. Si la répartition du métal est homogène et qu'il n'y a donc pas de croûte en surface, alors le rapport atomique (Co/Al)$_{broyé}$ obtenu sur le catalyseur broyé et le rapport atomique (Co/Al)$_{non-broyé}$ obtenu sur le catalyseur non broyé devrait être identique et le rapport des deux tendre vers 1.

Il est ainsi possible de caractériser le catalyseur selon l'invention en déterminant le rapport atomique (Co/Al) par XPS (Co/Al)/$_{XPS}$) du catalyseur non broyé ((CO/Al)$_{non-broyé}$ que l'on peut appeler NB pour simplifier la formule) et du catalyseur broyé ((Co/Al)$_{broyé}$ que l'on peut appeler B pour simplifier la formule) et de calculer le rapport (Co/Al)$_{XPS}$ des 2 résultats. Le rapport atomique mesuré en XPS peut s'écrire de la façon suivante:

$$(Co/Al)_{XPS} = (Co/Al)_{non-broyé} / (Co/Al)_{broyé} = NB/B.$$

Plus la croûte est fine et plus le rapport tend vers 1. Le catalyseur selon l'invention utilisé pour la synthèse Fischer-Tropsch a un rapport atomique (Co/Al)$_{non-broyé}$ / (Co/Al)$_{broyé}$, ou NB/B, compris entre entre 1 et 12, et de manière très préférée compris entre 1 et 10, et de manière encore plus préférée compris entre 1 et 5.

Selon une variante de l'invention, le rapport atomique (Co/Al)$_{non-broyé}$ / (Co/Al)$_{broyé}$, ou NB/B, peut être compris entre 1 et 5, entre 5 et 10, entre 10 et 12, suivant la présence ou pas de la croûte et de son épaisseur.

L'invention est illustrée par les exemples qui suivent.

## Exemples

### *Exemple 1 comparatif (standard) :*

Un catalyseur A1 comprenant du cobalt déposé sur un support de silice alumine est préparé par imprégnation à sec d'une solution aqueuse de nitrate de cobalt de manière à déposer en deux étapes successives de l'ordre de 13,5% poids de Co sur une poudre commerciale de silice alumine (SIRALOX® 5/170, SASOL) de granulométrie moyenne égale à 80 $\mu$m, de surface 171 m2/g et de volume poreux égal 0,519 ml/g.

Après une première imprégnation à sec, le solide est séché en étuve à 120°C pendant 3h sous flux air puis calciné à 420°C pendant 4h en étuve sous flux d'air de débit non contrôlé Le catalyseur intermédiaire contient environ 8% poids de Co. Il est soumis à une deuxième étape d'imprégnation à sec au moyen d'une solution de nitrate de cobalt. Le solide obtenu est séché en étuve à 120°C pendant 3h sous flux d'air de débit non contrôlé puis calciné à 420°C pendant 4h en étuve sous flux d'air. On obtient le catalyseur final A1 qui contient 13,5% poids de Co.

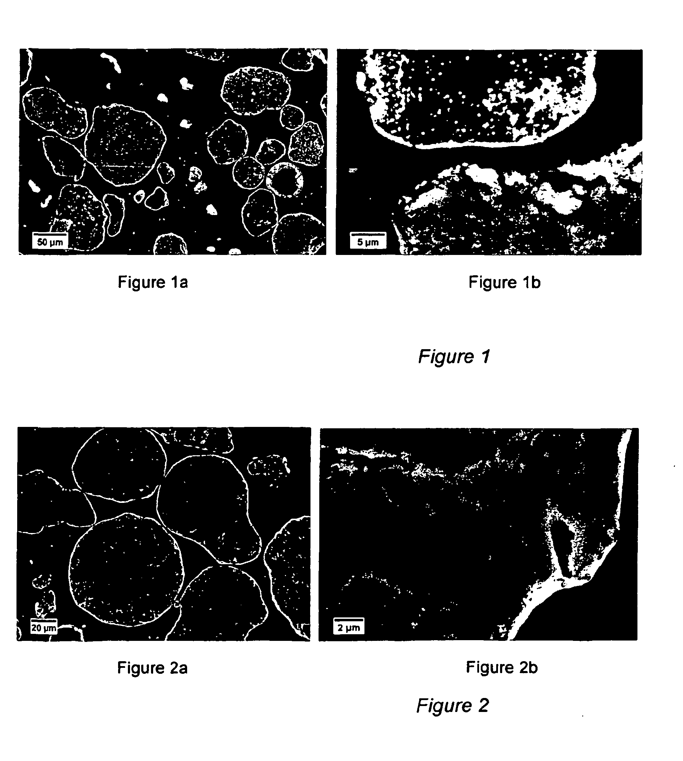

La microscopie électronique à balayage en électrons rétrodiffusés (figure 1) met en évidence la présence de croûte (figure 1 a) et une mauvaise répartition du cobalt au sein des grains de catalyseur (figure 1 b).

La mesure en XPS donne un ratio tel que défini dans le texte égal à 18,6 . Cette valeur confirme la présence de la croûte observée en microscopie électronique à balayage en électrons rétrodiffusés. (figure 1).

***Exemple 2 comparatif (standard) :***

Un catalyseur A2 comprenant du cobalt déposé sur un support de silice alumine est préparé par imprégnation à sec d'une solution aqueuse de nitrate de cobalt de manière à déposer en deux étapes successives de l'ordre de 13,5% poids de Co sur une poudre de silice alumine (SIRALOX 5/170, SASOL) de granulométrie moyenne égale à 80 $\mu$m, de surface 171 m2/g et de volume poreux égal 0,519 ml/g.

Après une première imprégnation à sec, le solide est séché dans un four tubulaire sous un débit d'air sec de 20°C à 120°C en suivant une rampe de 0.3°C/min sous un débit d'air de 12Nl/(h.g de catalyseur), le catalyseur est maintenu à 120°C pendant 4h sous flux d'air puis, sans être déchargé, la température est montée à 420°C en suivant une rampe de 1°C/min et sous un débit d'air de 12Nl/h pendant 4h. Le catalyseur intermédiaire contient environ 8% poids de Co. Il est soumis à une deuxième étape d'imprégnation à sec au moyen d'une solution de nitrate de cobalt. Le solide humide est séché dans un four tubulaire sous un débit d'air sec de 20°C à 120°C en suivant une rampe de 0.3°C/min sous un débit d'air de 12Nl/(h.g de catalyseur), le catalyseur est maintenu à 120°C pendant 4h sous flux d'air puis, sans être déchargé, la température est montée à 420°C en suivant une rampe de 1 °C/min et sous un débit d'air de 12Nl/h pendant 4h. On obtient le catalyseur final A2 qui contient 13,5% poids de Co.

La mesure en XPS donne un ratio tel que défini dans le texte égal à 13,2. Cette valeur confirme la présence de la croûte observée en microscopie électronique à balayage en électrons rétrodiffusés (figure 2) .

**Exemple 3 (selon l'invention) :**

Un catalyseur A3 comprenant du cobalt déposé sur un support de silice alumine est préparé par imprégnation à sec d'une solution aqueuse de nitrate de cobalt de manière à déposer en deux étapes successives de l'ordre de 13,5% poids de Co sur une poudre commerciale de silice alumine (SIRALOX® 5/170, SASOL) de granulométrie moyenne égale à 80 $\mu$m, de surface 171 m$^2$/g et de volume poreux égal 0,519 ml/g.

Après une première imprégnation à sec, le solide est séché dans un four tubulaire sous un débit d'air sec de la température ambiante à 80°C en suivant une rampe de montée en température 0,3°C/min sous un débit d'air de 1Nl/h/g de catalyseur, le catalyseur est maintenu à 80°C pendant 5h sous flux air puis, sans être déchargé, la température est montée à 360°C en suivant une rampe de montée en température de 1 °C/min et sous un débit d'air de 0,5Nl/(h.g de catalyseur) pendant 4h. Le catalyseur intermédiaire contient environ 8% poids de Co. Il est soumis à une deuxième étape d'imprégnation à sec au moyen d'une solution de nitrate de cobalt. Le solide humide est séché dans un four tubulaire sous un débit d'air sec de la température ambiante à 80°C en suivant une rampe de montée en température de 0,3°C/min sous un débit d'air de 1 Nl/h/g de catalyseur, le catalyseur est maintenu à 80°C pendant 5h sous flux air puis, sans être déchargé, la température est montée à 360°C en suivant une rampe de montée en température de 1 °C/min et sous un débit d'air de 0,5nL/(h.g de catalyseur) pendant 4h. On obtient le catalyseur final A3 selon l'invention qui contient 13,5% poids de Co.

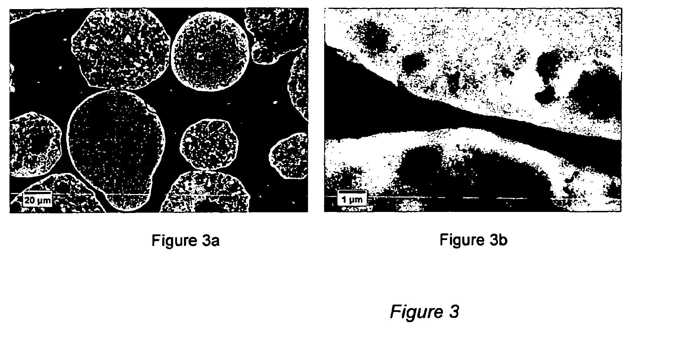

La microscopie électronique à balayage en électrons rétrodiffusés (figure 3) met en évidence l'absence d'une croûte régulière (figure 3a) et une bonne dispersion du cobalt au sein des grains de catalyseur (figure 3b).

La mesure en XPS donne un ratio tel que défini dans le texte égal à 10,8. Cette valeur met en évidence la présence d'une très petite croute non observable en microscopie électronique à balayage en électrons rétrodiffusés (Figure 3).

Tableau 1 récapitulatif des exemples 1, 2 et 3:

| Catalyseur | (Co/Al) $_{XPS}$ | Croûte MEB |
|---|---|---|
| A1 | 18,6 | importante |

(suite)

| Catalyseur | (Co/Al) $_{XPS}$ | Croûte MEB |
|------------|-------------------|------------|
| A2 | 13,2 | faible |
| A3 | 10,8 | non |

**Exemple 4 : Performances catalytiques des catalyseurs A1, A2, et A3 en conversion du gaz de synthèse.**

Les catalyseurs A1, A2 et A3, avant d'être successivement testés en conversion du gaz de synthèse, sont réduits *ex situ* sous un flux d'hydrogène pur à 400°C pendant 16 heures en réacteur tubulaire. Une fois le catalyseur réduit, il est déchargé sous atmosphère d'argon et enrobé dans de la Sasolwax® puis stocké avant test. La réaction de synthèse Fischer-Tropsch est opérée dans un réacteur de type slurry et fonctionnant en continu et opérant avec une concentration de 10% (vol) de catalyseur en phase slurry..

Chacun des catalyseurs se trouve sous forme de poudre de diamètre compris entre 40 et 150 microns.

Les conditions de test sont les suivantes:

Température = 220°C
Pression totale = 2MPa
Rapport molaire $H_2$/CO = 2/1
Vitesse volumique horaire (wh) = 1000h-1

Les conditions de test sont ajustées de façon à être à iso conversion de CO quelle que soit l'activité du catalyseur.

L'activité est calculée de la façon suivante pour un catalyseur de référence, la température de référence est égale à la température de base, l'activité est donc de 100%.

$$\text{Activité} = \exp\left(\frac{-E}{RT_{base}}\right).\exp\left(\frac{E}{RT_{ref}}\right)$$

avec T=225°C
E= énergie d'activation
R=constante des gaz parfaits

Les résultats sont calculés pour les catalyseurs A1, A2 et A3 par rapport au catalyseur de référence d'activité 100% et figurent dans le tableau 2. Les sélectivités alpha paraffines sont aussi données ainsi que la sélectivité en composés $C_{5+}$ et la sélectivité $CH_4$.

Tableau 2

| Catalyseur | Activité après 300h de test (%) | Sélectivité $C_{5+}$ | Sélectivité alpha paraffines | Sélectivité $CH_4$ |
|------------|----------------------------------|------------------------|-------------------------------|---------------------|
| A1 (comparatif) | 290 | 80 | 0.900 | 8.7 |
| A2 (comparatif) | 490 | 83 | 0.880 | 7.9 |
| A3 (selon l'invention) | 450 | 85 | 0.905 | 7.4 |

L'activité du catalyseur selon l'invention est améliorée par rapport à l'activité du catalyseur A1 (450 par rapport à 290). Sa sélectivité $C_{5+}$, alpha paraffines est elle aussi meilleure que celle du catalyseur A1 et du catalyseur A2. Le procédé selon l'invention permet ainsi d'obtenir de manière surprenante un catalyseur, avec très peu de croute (non visible en MEB mais détectable avec une faible valeur en XPS), à la fois plus actif et plus sélectif. Le catalyseur A3 selon l'invention permet aussi de limiter la sélectivité $CH_4$ par rapport au catalyseur A1 et A2.

La mesure de la sélectivité en alpha paraffine se fait via une analyse par chromatographie en phase gazeuse des effluents de la réaction, dosage des paraffines et calcul de la pente de la courbe log mol (%) = f(nombre de carbone) qui correspond au alpha.

L'abaissement de la sélectivité en $CH_4$ est aussi une amélioration importante du catalyseur puisque l'on souhaite favoriser la croissance de chaîne et donc limiter la perte de carbone par formation de molécules courtes.

La présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

**Revendications**

1. Procédé de préparation d'un catalyseur, pour effectuer la synthèse d'hydrocarbures à partir d'un mélange comprenant du monoxyde de carbone et de l'hydrogène, dont la phase active comprend du cobalt déposé sur un support formé d'une silice-alumine comprenant de 1 à 30 % poids de silice, et ledit catalyseur a un rapport atomique mesuré en spectroscopie photo-électronique à rayons X : $(Co/Al)_{non\ broyé}$ / $(Co/Al)_{broyé}$ compris entre 1 et 12, le rapport atomique $(Co/Al)$ étant défini par spectroscopie photo-électronique rayons X en déterminant la mesure pour des particules broyées et pour des particules non broyées, le rapport étant égal à : $(Co/Al)_{non\ broyé}$ pour des particules non broyées / $(Co/Al)_{broyé}$ pour des particules broyées, ledit procédé comprenant au moins une fois l'enchainement des étapes suivantes:

   - une étape d'imprégnation du support,
   - une étape de séchage réalisée une température inférieure à 100°C, avec une rampe de température comprise entre 0,3°C/min et 12°C/min, un débit de gaz compris entre 0.5 et 6 Nl d'air sec /(h.g de catalyseur), une pression égale à 0.1 MPa et pendant une durée comprise entre 2h et 15h,
   - une étape de calcination.

2. Procédé selon la revendication 1 dans lequel l'enchainement des étapes d'imprégnation, séchage et calcination est répété au moins deux fois.

3. Procédé selon une revendication 1 à 2 dans lequel l'étape de calcination est réalisée à une température comprise entre 320 et 460°C, avec une rampe de 0,3°C/min à 5°C/min et un débit de gaz compris entre 0,3 et 4 N d'air sec/(h.g de catalyseur) et pendant une durée comprise entre 2h et 15h.

4. Procédé de préparation d'un catalyseur selon l'une quelconque des revendications 1 à 3 dans lequel la teneur en cobalt est comprise entre 1 et 60 % poids.

5. Procédé de préparation d'un catalyseur selon l'une quelconque des revendications 1 à 4 dans lequel le support est formé d'une spinelle incluse dans une silice-alumine.

6. Procédé de préparation d'un catalyseur selon l'une quelconque des revendications 1 à 5 dans lequel la phase active contient au moins un élément additionnel choisi dans le groupe constitué par le ruthénium, le molybdène, le tantale, le platine, le palladium et le rhénium.

7. Procédé de préparation d'un catalyseur selon la revendication 6 dans lequel ledit élément additionnel est le platine, le ruthénium ou le rhénium.

**Patentansprüche**

1. Verfahren zur Herstellung eines Katalysators, um eine Kohlenwasserstoffsynthese durchzuführen, ausgehend von einer Mischung enthaltend Kohlenmonoxid und Wasserstoff, wobei die aktive Phase auf einem Trägermaterial aus Silica-Alumina abgeschiedenen Kobalt umfasst, wobei das Trägermaterial zwischen 1 und 30 Gew.% Silizium enthält, wobei der Katalysator ein Atomverhältnis von $(Co/Al)_{nicht\ zerkleinert}$ / $(Co/Al)_{zerklinert}$ zwischen 1 und 12 aufweist, gemessen mittels photoelektrischer Röntgenspektroskopie, wobei das Atomverhältnis $(Co/Al)$ definiert ist durch Bestimmung des Messwertes für die zerkleinerten Partikel und des Messwertes für die nicht zerkleinerten Partikel mittels photoelektrischer Röntgenspektroskopie, wobei das Verhältnis gleich ist zu $(Co/Al)_{nicht\ zerkleinert}$ für die nicht zerkleinerten Partikel / $(Co/Al)_{zerkleinert}$ für die zerkleinerten Partikel, wobei das Verfahren wenigstens einmal den Ablauf der folgenden Stufen umfasst:

   - eine Stufe der Imprägnierung des Trägermaterials,
   - eine Stufe der Trocknung durchgeführt bei einer Temperatur unterhalb von 100 °C mit einem Temperaturgradienten zwischen 0,3 °C pro Minute und 12 °C pro Minute, einer Gasbeladung zwischen 0,5 und 6 Normliter Trockenluft /(h . g Katalysator), einem Druck von 0,1 MPa und für eine Dauer zwischen 2 h und 15 h,
- eine Stufe der Kalzination.

**2.** Verfahren gemäß Anspruch 1, bei dem die Reihenfolge der Stufen von Imprägnation, Trocknung und Kalzination mehr als zweimal wiederholt wird.

**3.** Verfahren gemäß einem der Ansprüche 1 bis 2, bei dem die Stufe der Kalzination durchgeführt wird bei Temperatur zwischen 320 und 460 °C, mit einem Temperaturgradienten von 0,3 °C pro Minute bis 5 °C pro Minute und einer Gasbeladung zwischen 0,3 und 4 Normlitern Trockenluft /(h . g Katalysator) und für eine Dauer zwischen 2 h und 15 h.

**4.** Verfahren zur Herstellung eines Katalysators gemäß einem der Ansprüche 1 bis 3, bei dem der Gehalt an Kobalt zwischen einem und 60 Gew.% beträgt.

**5.** Verfahren zur Herstellung eines Katalysators gemäß einem der Ansprüche 1 bis 4, bei dem das Trägermaterial durch ein Spinell gebildet ist, eingeschlossen in einem Silica-Alumina.

**6.** Verfahren zur Herstellung eines Katalysators gemäß einem der Ansprüche 1 bis 5, bei dem die aktive Phase wenigstens ein zusätzliches Element enthält, gewählt aus der Gruppe gebildet durch Ruthenium, Molybdän, Tantal, Platin, Palladium und Rhenium.

**7.** Verfahren zur Herstellung eines Katalysators gemäß Anspruch 6, bei dem das zusätzliche Element Platin, Ruthenium oder Rhenium ist.

**Claims**

**1.** A process for preparing a catalyst for carrying out hydrocarbon synthesis starting from a mixture comprising carbon monoxide and hydrogen, the active phase of which comprises cobalt deposited on a support formed by a silica-alumina comprising 1 to 30 % wt of silica, and in which said catalyst has an atomic ratio $(Co/Al)_{not\ ground}/(Co/Al)_{ground}$, measured by X-ray photo-emission spectroscopy, in the range 1 to 12, the atomic ratio (Co/Al) being defined by X-ray photo-emission spectroscopy by determining the measurement for ground particles and for particles which have not been ground, the ratio being equal to: $(Co/Al)_{not}$ ground for particles which have not been ground/$(Co/Al)_{ground}$ for ground particles, said process comprising at least one concatenation of the following steps:

• a support impregnation step;
• a drying step carried out at a temperature of less than 100°C, with a temperature increase rate in the range 0.3°C/min to 1.2°C/min, a gas flow rate in the range 0.5 to 6 Nl of dry air/(h.g of catalyst), a pressure equal to 0.1 MPa and for a period in the range 2 h to 15 h;
• a calcining step.

**2.** A process according to claim 1, in which the concatenation of the impregnation, drying and calcining steps is carried out at least twice.

**3.** A process according to claim 1 or 2, in which the calcining step is carried out at a temperature in the range 320°C to 460°C, at a temperature increase rate of 0.3°C/min to 5°C/min and with a gas flow rate in the range 0.3 to 4 Nl of dry air/(h.g of catalyst) and for a period in the range 2 h to 15 h.

**4.** A process according to any one of claims 1 to 3, in which the quantity of cobalt is in the range 1% to 60% by weight.

**5.** A process for preparing a catalyst according to any one of claims 1 to 4, in which the support is formed by a spinel included in a silica-alumina.

**6.** A process for preparing a catalyst according to any one of claims 1 to 5, in which the active phase contains at least one additional element selected from the group constituted by ruthenium, molybdenum, tantalum, platinum, palladium and rhenium.

**7.** A process for preparing a catalyst according to claim 6, in which said additional element is platinum, ruthenium or rhenium.

Figure 1a

Figure 1b

*Figure 1*

Figure 2a

Figure 2b

*Figure 2*

Figure 3a

Figure 3b

*Figure 3*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6806226 B
- US 5036032 A
- EP 0736326 A
- EP 1119411 A